# EUROPEAN PATENT APPLICATION

(11) **EP 0 992 283 A2**
(43) Date of publication of application: **12.04.2000**
(21) Application number: 99118567.9
(22) Date of filing: 20.09.1999
(51) Int. Cl.: B01J 20/26, B01J 20/32, B01J 45/00, C02F 1/28

(54) **Method and product for selectively removing ions from aqueous solutions**

(30) Priority: 21.09.1998 US 157859
(71) Applicant: Polymer Group, Inc., North Charleston, S.C. 29405 (US)
(72) Inventor: Hevey, Richard C., Malvern, Pennsylvania 19355 (US)
(74) Representative: Flosdorff, Jürgen, Dr.

(57) **Abstract**

The method of producing an article capable of removing binding partners from aqueous solutions comprises the steps of preparing a porous substrate, applying a bonding agent polymer to said substrate capable of reacting with the binding partners, applying a crosslinking agent to said polymer to crosslink said bonding agent polymer and to bind said polymer to said substrate, and applying at least one additional layer of bonding agent polymer to said subtrate wherein said second layer is crosslinked to said first layer.

## Description

### BACKGROUND OF THE INVENTION:

A number of methods have been proposed for removing ions, typically cations, from aqueous media. In many cases, aqueous streams or industrial waste sites become polluted with toxic or undesirable metals, such as cadmium, chromium, mercury, nickel, copper, zinc, lead and uranium.

The methods of proposed removal include contacting a liquid stream with an ion exchange resin in bead form, or separation by chemical reaction involving precipitation. Another method involves bringing the aqueous stream into contact with certain water soluble polymers which are capable of selectively complexing or reacting with select metal ions. For example, the liquid stream may be mixed with water soluble polymers such as polyethylenimine (PEI) and the solution may be processed by ultrafiltration, with the filter retaining the PEI and complexed metals, while allowing the purified water and other uncomplexed ions to pass through. The polymer may be recycled by treatment with acid to release the complexed ions.

It is also known that PEI and other water soluble complexing polymers can be chemically modified with one or more chelators which bind specific ions from solution.

All of the previously proposed methods for the removal of toxic and other metal ions from solution have drawbacks and some have not been widely adopted even up to the present time. For example, many methods are inefficient due to limited capacity. Processes using ultrafiltration require use of a thin and fragile membrane which can easily become damaged or clogged. These processes and various forms of PEI and chelants are described in U.S. patent no. 4,741,831.

U.S. patents, nos. 5,169,,883; 5,002,984 and 5,167,404 describe a method and product in which PEI and a crosslinking agent are absorbed into a sponge, and the sponge is heated to crosslink the polymer.

There is a continuing need for processes and products capable of removing ions from aqueous solution, especially toxic or harmful heavy metals.

### BRIEF DESCRIPTION OF THE DRAWINGS:

Figure 1 is a graph illustrating the reaction kinetics of PEI with glutaraldehyde.
Figure 2 is a graph illustrating reaction rates at various pH levels.

### SUMMARY OF THE INVENTION:

The present invention generally comprises a product comprising a water insoluble porous or permeable substrate, at least one layer of a polymer having active groups capable of reacting with ions, preferably metal ions, and a crosslinking agent at least partially crosslinking said polymer and permanently bonding said polymer layer together and to the substrate. It has also been found that a layering effect, wherein two or more layers of polymer we applied to the substrate and are crosslined, significantly increase the capacity of the treated substrate to remove metal or other ions from an aqueous solution

The present invention also comprises a process in which a polymer capable of reacting with targeted reactive species is deposited on a porous substrate and crosslinked thereon with a suitable crosslinking agent in successive layers. In the alternative, a single crosslined layer may be chemically modified to make it more reactive with the targeted species.

The product of the present invention can be used in a column, a filter or other absorptive media for removal of metal ions or other targeted species from flowing or still water. When the ion absorbing capacity has been reached, the treated substrate can be regenerated by rinsing with acid to remove the metal ions without removing the crosslinked polymer from the substrate.

Also, using known chemical reactions, the active sites of the polymer can be chemically modified or reacted with other chelating agents or polymers, in order to increase the capacity for reacting with certain or selective metal ions or targeted species. This reaction may take place either before or after the polymer is absorbed onto the substrate. Providing successive crosslinked layers of different chemical structure is also possible, for example, to provide reactive sites for a spectrum of metal ions.

In a preferred embodiment, the polymer is a water soluble polymer containing active amine groups, such as polyethyleneimine (PEI) and derivatives, crosslinked on a substrate with an agent capable of preferentially reacting with primary amines to yield aldimines. Preferred crosslinking agents include dialdehydes, such as glutaraldehyde.

### DESCRIPTION OF THE PREFERRED EMBODIMENTS

A substrate is first selected for the purpose of carrying the crosslinked layers of polymer thereon. The only qualifications about the substrate is that it must be insoluble in water and be stable over the pH ranges employed. Also, the substrate preferably has a high surface area to maximize exposure of reactive sites of the polymer. Suitable substrates include inorganic powders and fibers, such as silica, organic fibers and fabrics, as well as fibers and fabrics made from polymers, such as polyamide, polyester or polyolefin. Especially suitable fabrics include woven and nonwoven fabrics based on cellulose, including rayon or acrylic fibers, or mixtures, due to their high surface area. Especially preferred are porous nonwoven fabrics which serve effectively as a substrate for chemical modification and for the removal of metal ions from an aqueous stream.

The polymer employed is selected from a group which is known by those skilled in the art to be capable of reacting or complexing with one or a selected group of ions, especially metal ions. These polymers typically comprise a large number of individual chains with reactive groups that are capable of being fully or partially linked together by a crosslinking agent. Suitable polymers, also referred to herein as bonding agent polymers, include polyamines, polyalcohols, polysulfides, polyphosphates, alkyl phosphates, and sulfates, and polyalkylcarboxylic acids. Among the polyamines are PEI, polyvinylamine, poly [4(5)-vinyl-imidazole], ethylene diamine, diethylenetriamine, triethylenetriamine, pentaethylenehexamine, and hexamethylenediamine with higher molecular weight polyamines being the preferred polymer. Polyalcohols include polyvinylalcohol, starch, amylase and polyallylalcohol. Polysulfides include polyvinylsulfide and polyallysulfide. Polycarboxylic acids and amides include polyacrylic acid, polyvinylpyrrolidone, polyacrylamide, polythiourea, and poly (2-hydroxylethyl methacrylate) Polyalkylphosphates and sulfates include polyvinylphosphate, polyvinylphosphonate, polyvinylsulfonate and polyvinylsulfate.

A specific embodiment of this invention resides in the process of modifying the water soluble polymers with chelatogens to render them more selective for anions or cations. Water soluble polymers can be modified, for example, by oxidation with chlorite or periodate, carboxymethylation with chloroacetic acid, or reacted with phosphorus acid/formaledhyde, N-methyl isothiocyanate, pyridine-2-aldehyde, the chloromethyl derivatives of 8-hydroxyquinoline, or 2 hydroxyethylaziridine to render them selective for specific metal ions. Said polymers can be chemically modified prior to absorption onto a solid phase and subsequent crosslinking, or the polymer may be adsorbed onto the solid phase, crosslinked and stabilized, prior to chemical modification of the polymer to yield a polychelatogen.

A wide variety of derivatives of PEI and other polymers capable of complexing with metal ions are known and are listed in Geckler and Volcheck (*Environmental Science and Technology*, 38, 725, 1996). Derivatives of polyethylenimine include an oxyquinoline derivate, PEI oxine, phosphorylated PEI, quaternized PEI and a sulfonated oxyquinoline derivate of PEI. Since unmodified PEI is fairly inexpensive and by itself is capable of absorbing many of the toxic and other metals of interest, the present invention will utilize PEI as the primary water soluble polymer, although other water soluble polymers can be employed.

Suitable crosslinking agents include those having two spaced functional groups capable of reacting with primary and/or secondary functional groups of the polymer in order to fix the polymer onto the substrate. The use of a crosslinking agent is essential for two reasons. First, if such agent is not employed, the polymer will not be permanently bound to the substrate. For example, if PEI is absorbed onto a substrate, washing with dilute caustic or dilute acid will cause loss of the PEI from the substrate. Second the use of such agent is essential to allow building of two or more layers of polymer onto the substrate.

In the preferred embodiment, dialdehydes and certain other crosslinking reagents have the propensity to preferentially react with primary amines (such as R-NH₂) to yield aldimines R - N = CH -R¹ that are significantly more stable than adducts of aldehydes with secondary or tertiary amines which cannot form said aldimines. Certain symmetrical dialdehydes are capable of forming complex oligomeric structures in aqueous solutions which can be used to crosslink polymers containing multiple amines at different locations. Glutaraldehyde is preferred, which when added to polymers containing amine groups is capable of crosslinking and stabilizing them. Similar dialdehydes include glyoxal, malondialdehyde, succinialdehyde, adipaldehyde, 3 methyl glutaraldehyde and 3-methoxy-2-4-dimethyl glutaraldehyde. A key feature of the present invention is the utilization of sufficient crosslinking reagent to not only partially crosslink a polymer onto a substrate surface but to introduce a sufficient number of reactive groups that can be utilized to add an additional layer of polymer which becomes chemically attached to the first layer. By treating the second layer with an excess of crosslinking reagent, this second layer becomes activated with the crosslinking reagent and can then be reacted with additional polymer to produce a third layer of crosslinked, chemically coupled polymer. If the original polymer were adsorbed onto a solid surface, it could be crosslinked, stabilized, and activated for coupling with another layer of polymer. This process could be repeated to build a surface layer on the solid phase. By appropriately selecting the polymer, a metal ion selective solid phase can be produced. For instance, if polyethyleneimine is used as a polymer, the polymer layered surface of the solid phase would be capable of chelating chemically distinct cations. The binding capacity of the polymer treated solid phase would depend on the number of layers applied onto the solid phase via the crosslinking reagent. The polymers in the successive layers can be the same or different.

Although the amount of crosslinking reagent reacts with available metal ion binding primary amines, and secondary amines, reducing their ability to bind metal ions, each additional layer of polymer adds additional amines. In addition, the formation of multiple layers depends solely on adding sufficient crosslinkers to permit reaction with a second layer of polymer and need not react with all primary or secondary amines present in the polymer. Although the use of a homobifunctional crosslinking reagent is preferred, it is known by those experienced in the art that heterobifunctional crosslinkers can also be utilized. In addition, the art of building multiple layers can employ a sequence of homobifunctional and/or heterobifunctional crosslinking reagents to build a polymer layer onto a solid phase. Another suitable class of crosslinking reagents are the so-called zero-length crosslinking reagents. An individual knowledgeable in the art would readily realize that each layer of polymer that is used to coat a surface could be crosslinked using a combination of homobifunctional, heterobifunctional, and zero-length crosslinkers.

Although the majority of crosslinkers utilized to stabilize polymers are employed in aqueous solution, the utilization of organic solvents is readily feasible. Such solvents would help prevent the premature hydrolysis of water labile crosslinkers, would solubilize certain crosslinkers and would accelerate polymeric reactions if said polymer tended to be hydrophobic in nature. Dialdehydes such as glutaraldehyde provide the additional advantage that once the aldehyde is reacted with a polymer the aldimine can be reduced to a secondary amine with a reducing reagent such as sodium borohydride. Again, those knowledgeable in the art would realize that the utilization of other chemical reducing agents could be employed in either aqueous or organic solvents to chemically reduce the reacted groups. Said reduction removes all unreacted aldehyde groups, as well as aldimines, to produce either an alcohol, secondary, or tertiary amine from the reacted aldehydes.

As will be illustrated in the examples to follow, PEI and glutaraldehyde react at room temperature and over a wide range of pH, with reaction rates decreasing at the extremes. If it is desired to limit the reaction rate to retain more reaction sites, or to allow more efficient buildup of layers, the pH may be adjusted accordingly. In any event, either the polymer, in liquid or dissolved form, or the bifunctional crosslinking agent, in liquid or solution form, may be first applied to the substrate and the other agent may be added. The sequence of addition is not critical. This causes a layer of crosslinked polymer to be formed on the substrate. As a second step, an additional quantity of polymer is applied to the substrate to provide a second and distinct layer of crosslinked polymer. The second polymer layer may be identical to the first or different, as long as the crosslinker is capable of reacting with the second polymer. Additional layers may be formed by applying additional amounts of crosslinking agent and polymer to increase the potential ion binding capacity.

The layers may be applied in any convenient fashion, such as by dipping a suitable fabric into a solution of the polymer, rinsing, and dipping into a solution of the crosslinking agent. While the amount of polymer applied has no limit in theory, it has been found that excess application will cause a fabric to become stiff and nonporous. Applications at levels less than twenty-five percent by weight of polymer to fabric are preferred.

In some cases, it will be possible to treat the fibers used in the fabric prior to the fabric formation step. In this way, a source of fibers with the modified surface could be used and, in some embodiments, blended with non-modified fibers to produce the fabric. For nonwoven fabrics, the method of fabric manufacture include, but are not limited to, carded staple fiber webs and air laid webs. In the case of traditional textile fibers, the treated staple fibers would be spun into yarns and then either knitted or woven into fabrics. In either case, the resultant fabric would have the same reactive surface created by the dipping procedure described above for a finished substrate fabric.

Following fabrication of the multilayered substrate and possible drying, the substrate may be employed in a variety of fashions. For example, a treated porous fabric may be employed in layered or spiral form in a column that forms a passageway for a flowing liquid stream, such as ground water, sea water, contaminated water pumped from a waste site, and water contaminated by a manufacturing operation, such as electroplating.

When used as a filter and employed in layers, the treated substrate of the present invention, when employed in porous fabric form and in layers, may be provided with spacers between the layers to minimize premature clogging. For example, an elastomeric mesh between adjacent layers may be employed to improve flow rate and to ensure good contact between a fabric packed into a column and water flowing therethrough.

When the capacity of substrate to complex metal ions or binding partners has been reached, the fabric or substrate may be discarded as waste or burned to recover the metal oxide content. In an alternative embodiment, the substrate may be recycled, typically by rinsing with a mild acid. In the case of PEI, this step causes the polymer to lose binding capacity for metals, while the crosslinking prevents the PEI from washing away from the substrate.

A further object and embodiment of this invention is the utilization of nonwoven fabrics as the solid phase for adsorbing the aforementioned polychelatogenes. Such fabrics which may be prepared, for example, from rayon and acrylic fiber, as well as mixtures of these polymers, have the unique property of a large surface area. The porosity of these fabrics renders them particularly suited for coating with water soluble polymer or polychelatogenes. These coated and activated fabrics are especially suited for binding metal ions from aqueous streams containing said metal ions because of their very large surface area. These fabrics offer the basic requirements of hydrophilicity, permeability, rigidity, insolubility, and inertness to metal ions in aqueous streams. Nonwoven fabrics provide a particularly inexpensive and economical means for providing a solid phase for polymers and polychelatogens. Another embodiment of the present invention is the ability to pretreat the synthetic rayon fibers and acrylic fibers with polymers and polychelatogens prior to processing into fabrics. By practicing the embodiments of the present invention, a support matrix of rayon and/or acrylic fiber can be used as a polymeric carrier for water soluble polymers and polychelatogens. Said coated fibers can then be treated with a crosslinking reagent, and then multilayered with polymer and crosslinking reagent. The fibers thus treated can be blended with untreated fibers to produce a fabric with metal ion binding capacity.

The following examples are given for purposes of illustration of the novel composition of matter of the present invention and to methods for preparing the same. These examples are given merely for purposes of illustration and it is to be understood that the present invention is not necessarily limited thereto.

### Ultrafiltration of Polyethyleneimine (PEI)

BASF polymin p (78 grams) was placed in 1.0 liter of water and the pH adjusted to 7.60. This solution was run through an ultrafiltration membrane, 10,000 NMWC and the permeate discarded. Distilled water was added to the retentate to make up water loss due to permeation. This process was repeated until 6 liters (6 volumes of wash) had passed through the ultrafiltration membrane. In all instances, ultrafiltration was allowed to proceed until the permeation rate dropped to less than 0.2 ml/mn.

### Glutaraldehyde Purity

The absorption of glutaraldehyde in 0.05M phosphate buffer, pH 8.5, was measured at 280nm and 235nm. A purification index of 0.21 (ratio A235/A280) was employed for pure glutaraldehyde (Anderson, J. Histochem. Cytochem, 15, 652, 1967). Glutaraldehyde used to crosslink PEI had a purity index of 5.88. Such a number indicates a high proportion of polymeric and α,β unsaturated glutaraldehyde.

### Example 1

A piece of 70% rayon/30% cyanoacrylate cloth 12 x 12 inches was placed into a solution of PEI (5.5%) whose pH had been adjusted to an alkaline range with 8.0 x 10⁻⁴ N NaOH. The cloth was allowed to sit overnight at room temperature. The cloth was then removed from the PEI solution, copiously rinsed in running water, and then placed in the solution of glutaraldehyde 2% for 3 hours. The cloth was removed, rinsed copiously with water and dried overnight.

### Example 2

Example 1 was repeated using 10, 5.5, 2, 1 and 0.5% PEI in 8 x 10 ⁴ N NaOH. The cloth which was a blend of 70% rayon and 30% cyanoacrylate was then treated with 2% glutaraldehyde for three hours.

### Example 3

Example 1 was repeated but the concentration of glutaraldehyde in the second step was changed to 10%, 8%, 2%, 0.5% and the crosslinking time was varied from 1 to 24 hours (1, 2, 3, 6, 24 hours).

### Example 4

Example 1 was repeated but after fixing with glutaraldehyde, the cloth was not dried but placed in a solution of 0.2M sodium borohydride in .07M sodium phosphate buffer, pH 8.0, overnight at room temperature to chemically reduce the aldehyde and aldamine functionalities to alcohol and amine. The cloth was then removed from the borohydride, rinsed with water and dried.

Both rayon, and rayon/cyanoacrylate cloth reacted with the PEI to produce a fiber with PEI adsorbed onto the fiber. When placed in water containing copper acetate at pH 4.5, all fibers adsorbed copper to produce a blue cupric ammonium complex within the fiber. When placed in 0.1HC1, the copper eluted from the fiber into the acid solution.

### Example 5

A piece of rayon cloth and a piece of 70% rayon/30% cyanoacrylate were placed in a solution of PEI (5.5%) which contained 8.0 x 10⁻⁴ M NaOH. The cloth was allowed to sit overnight in the PEI solution. The pieces of fabric were removed from the PEI solution and copiously rinsed in running water. The swatches were allowed to dry overnight at room temperature. When wetted and placed in water containing copper acetate at pH 4.5, the swatches adsorbed copper to produce a blue cupric ammonium complex within the fibers. When placed in 0.1N HCI, the copper eluted from the fiber into the acid. If the swatches, however, were placed in 5.0M NaOH for 90 seconds, removed and rinsed copiously with running tap water, the fabric would not adsorb copper ions when placed in copper acetate pH 4.5. This could be demonstrated by rinsing the alkalai treated blue stained fabrics with running tap water, with which unbound copper is readily removed. If watches treated, as above, with PEI, were crosslinked or stabilized with glutaraldehyde prior to treatment with 5.0M NaOH, the fabric retained its ability to bind copper.

The PEI/glutaraldehyde treated fabrics could be chemically reduced with sodium borohydride to further stabilize the glutaraldehyde/PEI amine bonding. Fabric reduced with sodium borohydride readily retained its ability to bind copper ion when cycled through copper acetate, 0.1M HC1, and 5.0M NaOH.

The binding of PEI to the swatches is reversible and the PEI elutes from the fiber in alkaline solution unless it is "fixed" or crosslinked to the fabric with glutaraldehyde.

### Example 6

A cloth swatch, 8" x 10", of 70% rayon/30% acrylate was washed with distilled water and dipped in 10% glutaraldehyde (0.05M phosphate buffer, pH 8.5) for 30 minutes. The swatch was wrung dry, placed in 5.5% PEI (phosphate buffer) and allowed to react for 30 minutes. The fabric was removed from the PEI, wrung dry, rinsed copiously with tap water and placed again into 10% glutaraldehyde phosphate buffer, pH 8.5, for 30 minutes. The fabric was removed from the glutaraldehyde, wrung dry and washed copiously with tap water. The damp cloth was placed in 5.5% PEI/phosphate buffer, pH 8.5 for 30 minutes. The wash cycle was repeated and the cloth placed into 10% glutaraldehyde/phosphate buffer. The wash cycle was repeated and the cloth placed in 5.5% PEI/phosphate buffer overnight at room temperature. Samples of fabric were removed after each aldehyde/PEI reaction for evaluation. The cloth left overnight in 5.5% PEI/phosphate buffer was subjected to a wash cycle and allowed to dry at room temperature.

When the fabric pieces taken from each cycle were placed in copper acetate, pH 4.5, a blue cupric ammonium complex formed on the fibers of the cloth. When the copper bound to the fabric was eluted with 0.1M HC1 and quantitated with bicinchoninic acid, the results shown in Table IV were obtained. A piece of fabric not treated with PEI/glutaraldehyde was used as a control.

**TABLE I**

| **COPPER BINDING CAPACITY FOR CLOTH SWATCHES REPEATEDLY TREATED WITH PEI AND GLUTARALDEHYDE** | | |
|---|---|---|
| | Description | mgCu ⁺⁺/inch² |
| Sample #1 | cloth untreated | .014 |
| Sample #2 | cloth treated once | .025 |
| Sample #3 | cloth treated twice | .048 |
| Sample #4 | cloth treated three times | .060 |

### Example 7

Cellulose (cellulose fiber), 100 gms, was treated with 2 liters of 1.4% ultrafiltered PEI polymer at pH 10.9. The amount of PEI bound was quantitated using the method of Perrine and Landis (Perrine and Landis, J. Polymer Science, A-1, 5, 1993, 1967). This represented the difference in the concentration of PEI in the initial coating solution and that observed after the coating process had occurred. Analysis of the initial 2.0 liters of PEI indicated that it contained 27.5 g PEI. After 72 hours in the presence of 100g of cellulose fiber, the amount of PEI free in solution was 20.02g indicating that 7.48g of PEI had bound to the cellulose. This represents 1.5g PEI (ultrafiltered)/100g cellulose fiber. This compares favorably to the literature value of 2.0g/100g (Kindler and Swanson, J. Poly. Sci., A-2, 9, 854, 1971) since different cellulosic products are being used. Upon a repeat treatment of the PEI/cellulosic fiber in 1.38% PEI, pH 10.9, at room temperature for 72 hours only 2.9% additional PEI is bound to the cellulosic fiber. Clearly upon retreatment with PEI, the cellulosic fiber will not pick up additional PEI to any significant amount.

### Example 8

The rate of binding of glutaraldehyde to PEI in aqueous solution was evaluated by reacting 16.7m Molar PEI with 1.4m Molar glutaraldehyde in 0.5m sodium phosphate buffer at pH 7.4. As can be seen in Figure 3, the initial reaction of glutaraldehyde is very rapid at pH 7.4. Glutaraldehyde saturation of PEI occurs in less than 100 seconds, clearly indicating that this part of the reaction is very rapid and requires a minimum incubation period. Certainly at higher glutaraldehyde concentrations, the reaction kinetics would be faster yet.

### Example 9

A rayon swatch was dipped in 12.5% PEI at pH 7.0-7.5. The swatch was dried by placing in an oven at 110°C. The fabric was then placed in 12.5% glutaraldehyde in 0.25M sodium bicarbonate, pH 9.5, for 10 minutes. The swatch was removed from the glutaraldehyde, wrung dry and placed immediately in 12.5% PEI at pH 7.0-7.5, and reacted for 1 hour at room temperature. The swatch was removed from the PEI bath and washed thoroughly with tap water, and sequentially with 0.2M NaOH, 0.1M HC1, and then 0.05M NaOH, followed by a second thorough rinsing with tap water. When dipped in aqueous copper acetate, copper bound to the fabric as the blue cupric ammonium complex. The copper could be eluted from the cloth by treating it with 0.1M HC1. If this fabric was then treated with 0.05M NaOH and 0.1M sodium acetate buffer, pH 5.5, it could be recycled through the copper acetate, binding an additional quantity of cupric ion. When one such swatch of fabric was cycled through the copper acetate and analyzed for the amount of copper bound to the fabric, analysis indicated that the binding was 1.10mg Cu⁺⁺/in² fabric.

### Example 10

Rayon fabric and 70% rayon/30% cyanoacrylate fabric were treated with variable amounts of PEI and glutaraldehyde to evaluate the effect of the concentration of glutaraldehyde and PEI on fabric performance. In a typical experiment, the fabrics were placed in 1% PEI adjusted to pH 7.36 for 30 minutes. The fabrics were wrung dry and placed in 6.25% glutaraldehyde in 0.25M sodium bicarbonate, pH 9.5, for 30 minutes. The fabrics were wrung dry and placed in 1% PEI, pH 7.36, for 30 minutes. Fabrics were wrung dry and placed in 2% glutaraldehyde prepared in 0.25M sodium bicarbonate, pH 9.5, for 30 minutes. The fabrics were wrung, dried and placed in 1% PEI at pH 7.3 for 1 hour. Fabrics were recycled through the 1% PEI/glutaraldehyde treatment one additional cycle and then dried at 105°C.

The above process was repeated but 4.85% PEI, pH 7.37 was used in all recycled runs. The above process was again repeated but this time 26.5% PEI was used to treat the fabrics. In addition, the second and third treatment with glutaraldehyde used 10% glutaraldehyde instead of the 2% solution previously used.

Fabrics treated with 26.5% PEI and 10% glutaraldehyde were very stiff. This "board-like" quality rendered the fabrics unsuitable for column packing. Nitrogen analysis of the fabric treated with 1% PEI indicated that the rayon fabric contained 0.59% nitrogen after the first treatment with PEI and 0.88% nitrogen after the third treatment with PEI. The fabric composed of 70% rayon/30% cyanoacrylate contained 1.03% nitrogen after the first treatment with PEI and 2.18% nitrogen after the third treatment with PEI. The rayon fabric, after the last treatment with PEI, bound 2.90mg Cu⁺⁺/gm of fabric. Rayon-cyanoacrylate (70-30) bound 3.38mg Cu⁺⁺/gram fabric after the last treatment with PEI.

### Example 11

A swatch of rayon fabric was treated three times with 4.85% PEI, pH 7.37, and glutaraldehyde as outlined in Example 10. A piece of treated fabric 2.75" x 12" was placed on a porous sheet of melt blown elastomer and rolled into a cylinder. This cylinder was packed with water into a 1.9cm diameter chromatographic column such that a bed volume of 1.9cm x 7cm was obtained. The void volume for this bed was 8.5ml as determined by blue dextran. The packed bed was washed with 1 liter of sodium hydroxide, 2 liters of water, 1 liter of 10% HC1, and 2 liters of water. Determination of the effluent pH, (pH 7.01) indicated that no residual acid remained in the column. To this column was added 1 liter of a solution of nickel sulfate in water. This solution contained 258ppm Ni⁺⁺ via a Spectroquant nickel assay. Flowthrough analysis revealed that only 2.30ppm Ni⁺⁺ eluted from the column for the first 171ml, indicating that 99.1% of the nickel added to the column bound to the fabric. Breakthrough of nickel occurred after 171ml. After all of the nickel solution (251.8ppm) had flowed through the column, the column was washed with 1 liter of distilled water and the bound nickel eluted with 10% hydrochloric acid. Analysis of the eluate indicated that 90mg of Ni⁺⁺ had bound to fabric. This amounted to 2.72mg Ni⁺⁺/in² of fabric. Nitrogen analysis of this fabric indicated that it contained 7.05% nitrogen.

The previous column was washed with water until the flowthrough was neutral. To this column was added 660 mls of 562.4ppm copper acetate. Fractions were collected and analyzed for Cu⁺⁺ with bicinchoninic acid. This analysis indicated that during the adsorption phase, a maximum of 30ppm was found in the effluent. A volume of 281ml of copper acetate was required to saturate the column. The Cu⁺⁺ bound to the cloth was eluted with 10% HC1. Analysis of eluted copper showed that 158mg of Cu⁺⁺ bound to the fabric or 29.3% of that applied to the column. Nitrogen analysis indicated that the rayon fabric contained 7.05% nitrogen. The binding capacity of the fabric was 4.8mg Cu⁺⁺/in² fabric.

### Example 12

Polyethyleneimine was carboxymethylated with chloroacetic acid according to the following procedure. Ultrafiltered polymin P 39.5mg/ml was mixed with chloroacetic acid in 100g of water. Sodium hydroxide in 250ml of water was slowly added dropwise to the reaction mixture with constant stirring. After the addition was complete, the solution was heated to 68°C for two hours with stirring. The reaction mixture was allowed to sit overnight at room temperature. In modifying the PEI, the ratio of primary amines and secondary amines to total amines present in the PEI was assumed to be 3/4. On a molar basis, sufficient chloroacetic acid was added to modify 10%, 30%, 50% or 80% of the primary and secondary amines present in the polymer. No correction was made for autolysis of the chloroacetic acid in the reaction mixture. When referring to degree of modification of PEI by chloroacetic acid, the percent refers to the degree of carboxymethylation desired. The modified polymer was purified by ultrafiltration as in Example 1.

### Example 13

### Reaction of fabric with carboxymethyl PEI

A rayon fabric was treated with 5.38% PEI at pH 8.50, removed from the PEI solution, wrung dry and dipped in 25% glutaraldehyde in 0.2M phosphate buffer, pH 10.91. The fabric was removed from the glutaraldehyde, wrung dry and allowed to sit at room temperature for 30 minutes. This fabric was rinsed three times in tap water and one time with distilled water. The fabric was wrung dry and placed in 50% modified carboxymethyl PEI. The modified PEI had a concentration of 17.8mg/ml with a pH of 8.56, The aldehyde activated fabric was allowed to react with carboxymethyl PEI for two hours at room temperature. The fabric was removed from the carboxymethyl PEI, rinsed with distilled water, and allowed to dry at room temperature. The reaction with 10% glutaraldehyde and carboxymethyl PEI was repeated a second time. The treated fabric was placed in 2650ppm Ca⁺⁺ overnight. The fabric was removed from the calcium solution, washed copiously with distilled water and dried at room temperature. The Ca⁺⁺ was eluted from the fabric with 0.1M HC1 and the amount of calcium was determined using a calmagite colorimetric assay. A rayon fabric only treated with PEI was used as a control. The amount of Ca⁺⁺ bound to the control was 0mg/g fabric, the amount of Ca⁺⁺ bound to the carboxymethyl PEI was .06mg/gram of fabric.

### Example 14

Rayon fabric was modified with 5.55% PEI at pH 8.46 by dipping a rayon swatch in 5.5% PEI and allowing the swatch to sit in a PEI solution at room temperature for 10 minutes. The fabric was wrung dry and placed in 1% glutaraldehyde in .05M phosphate buffer, pH 7.2, for 30 minutes, removed from the glutaraldehyde and wrung dry. The fabric was cycled through 5.55% PEI and 2.5% glutaraldehyde and finally cycled twice through 26.5% PEI, pH 7.27, and 5.5% glutaraldehyde.

The coated fabric was placed in a 1 liter beaker, 400ml of 2.32% sodium hydroxide was added and then 10.9g chloroacetic acid was added. The excess alkali was neutralized with 20% HC1 to a pH of 7.0 and an additional 10.9g of chloroacetic was added and the pH of the solution was adjusted to 8.0. The towel sat in the reaction mixture overnight. Residual fluid was decanted from the beaker, the cloth was wrung dry and washed copiously with distilled water. The cloth was dried at room temperature. A piece of the carboxymethylated fabric was placed in 2650ppm Ca⁺⁺ at pH 7.2 overnight. The cloth was removed from the Ca⁺⁺ solution, washed copiously with distilled water and dried at room temperature. The fabric was placed in 20% hydrochloric acid to elute the bound Ca⁺⁺. A control of rayon fabric treated only with the PEI and glutaraldehyde was evaluated for its Ca⁺⁺ binding capacity by simultaneously incubating both fabrics in the Ca⁺⁺ solution. Analysis of bound calcium indicated that the carboxymethylated fabric bound .26mg Ca⁺⁺/g fabric while the PEI treated fabric bound 0mg Ca⁺⁺/g.

### Example 15

Rayon fabric was modified with s-triazene trichloride (STT) (Smith et al., Anal. Biochem., 61, 392, 1974) and reacted with a 30% solution of polyvinyl alcohol (PVA) in 0.5M carbonate buffer, pH 10.2. The fabric was allowed to sit for 24 hours in the PVA solution and then heated to 80°C for 1 hour. The fabric was removed from the PVA, washed in tap water, distilled water, and finally dried at room temperature. An STT modified fabric was also reacted with 1.35% PEI in 1% borate buffer, pH 8.57, for 72 hours. The fabric was removed from the PEI solution, wrung dry, and copiously washed with tap water and distilled water. The fabric was allowed to dry overnight.

The PVA modified fabric was converted to a polyenolketone (Shiraishi, et al., Kopbunshi Kagaku Zasshi, 65, 1430, (1962) from C.A. 58:5496e, 1963) by oxidation with hypochlorite. The PVA modified fabric was treated with 6% lithium hypochlorite and glacial acetic acid to oxidize the PVA fabric to a poly(enol-Ketone) fabric. Such polyenolketones are known to readily form metal complexes with Nickel and Copper. In order to evaluate the complexing ability of fabrics, the PVA cloth, PEI cloth, and Poly(enol-Ketone) cloth were all treated with 1000ppm Nickel at pH 8.0 for twenty minutes. The swatches were removed from the Nickel solution and copiously washed with tap water and distilled water. One-half of each fabric swatch was placed in 20% HC1 to elute bound Ni⁺⁺. The swatch was quickly washed in tap water and distilled water to remove adhering acid. All swatches were sprayed sequentially with Spectroquant® nickel reagents to develop any Ni⁺⁺ positive areas. All swatches that had been exposed to acid gave a colorless reaction while the other half that had not been exposed to acid gave a dark pink coloration characteristic of the dimethylgloxime complex of nickel.

### Example 16

In order to evaluate the ability of other bifunctional reagents to fix PEI to fabrics, the two bifunctional reagents dimethylsubermidate and ethylene glycol-bis-succinimide ester we evaluated as crosslinking reagents.

In one experiment, rayon fabric was soaked in 12.5% PEI at pH 7.5 for three hours. The fabric was removed from the PEI, wrung dry and allowed to sit at room temperature for 7 days. This fabric was then extensively washed in running tap water and distilled water. The fabric was allowed to dry for 8 hours at room temperature. A swatch was removed from the PEI treated rayon cloth and treated with 15% dimethylsuberimidate at pH 8.2 for 2.5 hours. The swatch was removed from the linking solution, washed extensively in tap water and one time with distilled water. This "activated' swatch was placed in 25% PEI prepared by dissolving 50% PEI in 0.2M dimethylethanolamine/0.1M borate buffer, pH 8.20. The imidate treated cloth was immersed into the PEI solution and allowed to react for three hours at room temperature, followed by removal and washing. The fabric swatch was again placed in 15% suberimidate dissolved in dimethylethanolamine/Borate buffer, pH 8.2, allowed to react for 4.5 hours, removed, and placed in 25% PEI (0.2M dimethylethanolamine/0.1M Borate buffer, pH 8.20) for three hours. The swatch was removed, washed and allowed to dry at room temperature.

In another experiment, the rayon fabric that was precoated with PEI and dried at room temperature was soaked in 100% acetone. A solution of 1% ethyleneglycol bis succinimide ester in acetone was prepared and the PEI treated fabric placed into this solution for 2.5 hours. The reaction vessel was capped at all times. The fabric was removed from the container, wrung dry and thoroughly wetted with 12.5% PEI in 0.2M dimethylethanolamine/0.1M Borate buffer, pH 8.20. The towel was allowed to sit for 1.5 hours in the presence of the PEI. The swatch was then placed in 2% succinimide ester dissolved in acetone. This reaction was allowed to proceed for 4 hours. The swatch was removed from the solution of coupling agent and treated as above with 12.5% PEI. The PEI/succinimide ester treated fabric was extensively washed with running tap water, rinsed in distilled water and dried at room temperature.

In all experiments, a piece of fabric was employed as a control and treated with PEI only. In order to evaluate Cu⁺⁺ binding, the treated swatches were reacted according to the following sequence:
1. Dip 10 times in 20% HC1.
2. Wash with DI water 10 times.
3. Dip 10 times in 1.7M NaOH.
4. Wash with DI water 10 times. Repeat 1 to 4 again.
5. Place the fabric in 10% sodium acetate buffer, pH 5.45 for 120 seconds.
6. Place the fabric in 3% copper acetate, pH 6.0. Let sit for 1 minute.
7. Wash the fabric copiously with a stream of distilled water.
8. Dip the fabric 5 times in 1 liter of distilled water.
9. Place the swatch in 5M1 1M HC1 and let sit for 10 minutes.
10. Remove the 1 inch² swatches from the 1M HC1, discard and analyze the HC1 for Cu⁺⁺ via the bicinchoninic acid assay.
Fabric that had been treated with dimethylsuberimidate and PEI produced a heavy gelatinous coating on the surface of the fabric. When placed in copper acetate solution, only the top surface of the layer bound copper ions. When scratched with a sharp object, a clear layer was exposed, indicating bonding of copper on the surface. Cu⁺⁺ binding results are given in Table II and III.

**TABLE II**

| **Modification or Rayon with PEI Using Dimethylsuberimidate** | |
|---|---|
| | Mg Cu⁺⁺ Bound/in² |
| Fabric + PEI | 0.25 |
| Fabric + 2PEI +imidate | 9.25 |
| Fabric + 3PEI + imidate | 5.76 |
| Fabric + 2PEI only | 1.00 |
| Fabric + 3PEI only | .752 |

**TABLE III**

| **Modification of Rayon with PEI using Ethyleneglycol Bis Succinimide** | |
|---|---|
| | Mg Cu⁺⁺ Bound/in² |
| Fabric + PEI | 1.00 |
| Fabric + 2PEI + Bis Succinimide | 3.51 |
| Fabric + 3PEI + Bis Succinimide | 5.76 |
| Fabric + 2PEI Only | 2.00 |
| Fabric + 3PEI only | 3.76 |

### Example 17

A piece of hydrophobic polypropylene fabric 1 ft² was treated with polyethyleneimine according to the following protocol.
(i)Initially treat the fabric with 6.625% PEI in .05M sodium phosphate buffer, pH 8.64. The swatch is removed from the PEI solution and extensively washed in running tap water. Let dry at room temperature for 6 days.
(ii)Place the fabric in 25% glutaraldehyde for 15 minutes. Wring dry and place in 5.55% PEI, pH 8.6 for five (5) minutes.
(iii)Remove the above fabric from the 5.55% PEI and allow to sit at room temperature for 30 minutes. Wash the fabric extensively in running tap water.
(vi)Place the fabric in 1.5% glutaraldehyde for 15 minutes. Remove it from this solution, allow to drain for 5 minutes and place in 5.55% PEI, pH 8.6 for 30 minutes.
(v)The fabric is then wrung dry and placed in 1.6% gluataraldehyde for 20 minutes. The fabric is removed from the glutaraldehyde, wrung dry and placed in 5.55% PEI for thirty minutes.
Remove from the PEI and wring dry. Allow the fabric to sit at room temperature overnight. The next morning rinse extensively in warm running tap water and place in deionized water for 5 minutes. Wring dry.

The treated polypropylene fabric was cut into smaller swatches and evaluated for their ability to bind copper by placing in 4% copper acetate, pH 5.5 for two minutes. The bound copper was eluted into 12.0 ml of 20% hydrochloric acid. Pieces of the fabric were, in addition, evaluated for total nitrogen via digestion in sulfuric acid/50% hydrogen peroxide and determination of ammonia using an ion selective electrode. Results are given in Table IV.

**TABLE IV**

| **DETERMINATION OF PEI AND CU**^{**++**} **BOUND TO POLYPROPYLENE FABRIC** | | | |
|---|---|---|---|
| **Fabric Area** | **Cu**^{**++**} **mg Bound/in**^{**2**} | **mg PEI/in**^{**2**} | **mg Cu**^{**++**}**/g PEI** |
| 1 inch² | 6.95 mg | 22.9mg | 303 mg/gram PEI |

### Example 18

The effect of pH on the reaction of glutaraldehyde with PEI was investigated by measuring the initial spectrophotometric reaction rate at 240 nmeters at different pH's. At all pH's., the final concentration of PEI was 0.85 mMolar and glutaraldehyde 0.97 mMolar. Four different buffer sodium salts were employed to prepare buffers - phosphate, acetate, citrate, and carbonate - which covered the pH range from 2 to 12. All buffer solutions were at 0.1M concentration. Results are plotted in Figure 2.

### Example 19

Cotton fabric was cut into strips and placed in 5.5% PEI for 24 hours. The PEI had been adjusted to nine different pH's. The fabric was removed from the PEI and rinsed in tap water and DI water. Analysis of the strips for nitrogen yielded the PEI binding data shown in Table V.

**TABLE V**

| **EFFECT OF pH ON THE BINDING OF PEI TO COTTON FABRIC** | |
|---|---|
| **pH** | **% PEI Bound to Fabric** |
| 3.12 | 0.57% |
| 4.14 | 1.67% |
| 5.21 | 0.50% |
| 6.92 | 0.54% |
| 7.29 | 0.34% |
| 8.19 | 0.36% |
| 9.05 | 0.65% |
| 10.31 | 0.76% |
| 11.23 | 0.81% |

The remaining fabric strips were then treated with 25% glutaraldehyde in water for 45 minutes, removed and washed. One strip was placed in 5.5% PEI at the pH's shown in Table 9 and allowed to react for 45 minutes at each pH. The strips were removed from the PEI solutions, rinsed in tap water and DI water and dried at room temperature. A piece of each fabric 1 inch² was treated with 4% copper acetate, pH 5.5, and evaluated for Cu⁺⁺ binding by atomic absorption spectrometry. In addition, pieces of each fabric were analyzed for their nitrogen content. A piece of untreated fabric (not treated with PEI or glutaraldehyde) was employed as a control. Results are presented in Table VI.

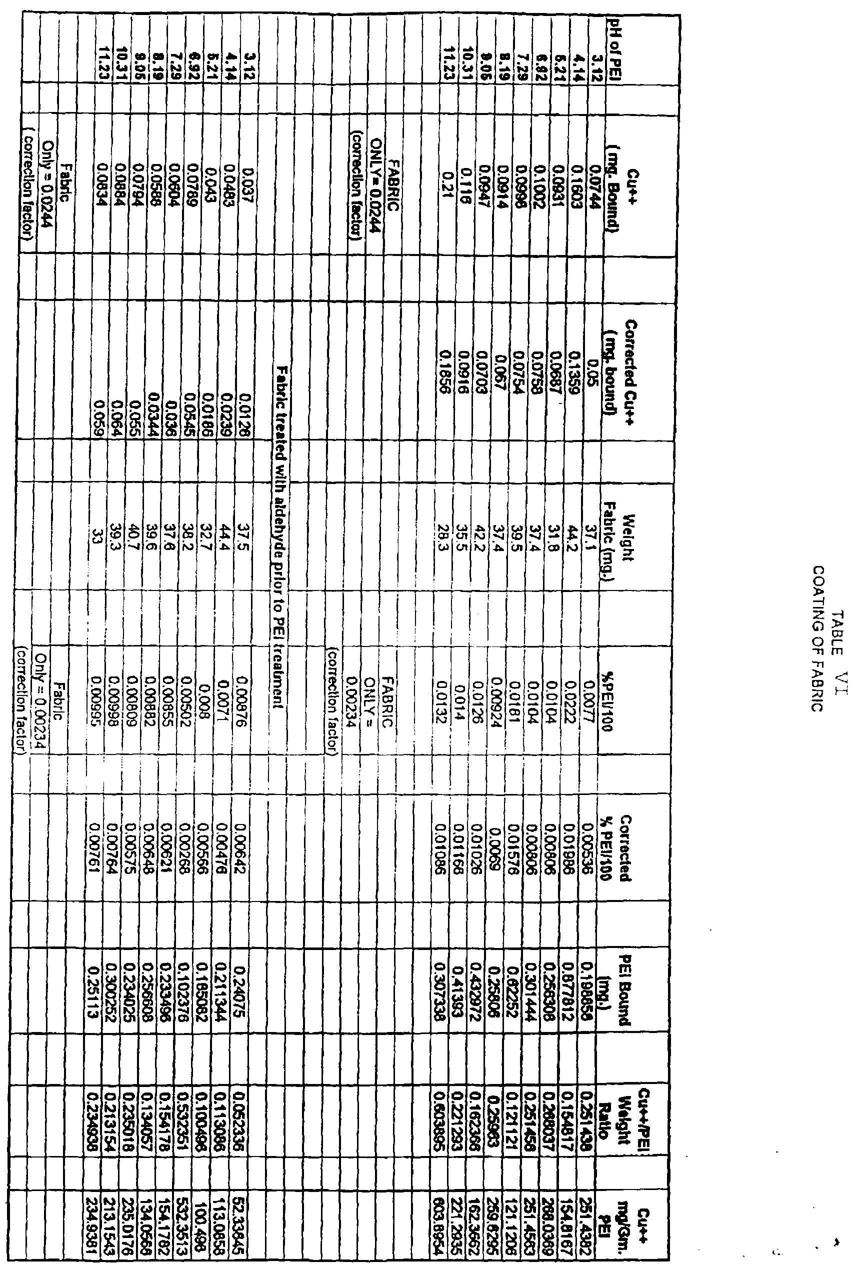

In order to evaluate the effect of reversing the coating sequence, a piece of cotton fabric was treated initially with 25% glutaraldehyde in water for 45 minutes, removed and washed with copious amounts of water. The fabric was cut into smaller swatches. A piece of swatch was placed in PEI (5.5%) at the pH's shown in Table VI, reacted for 45 minutes, removed from the coating solutions, and rinsed thoroughly and allowed to dry at room temperature. A piece of each treated swatch was reacted with 4% copper acetate, pH 5.5, and evaluated for Cu⁺⁺ binding by atomic absorption spectroscopy after elution with 1M HC1. Nitrogen content was also determined for each swatch. Results are presented in Table VI entitled Coating of Fabric, under the section entitled "Fabric Treated with Aldehyde prior to PEI Treatment." A piece of untreated fabric served as a control in each analytical procedure.

### Example 20

Polyvinylpyrrolidone (PVP) was hydrolysed in 8 M hydrochloric acid at 110°C for 45 hour (K. Lotz and Stryker, J. Am Chem Soc., 82 5169, 1960). This process cleaved the amide linkage in the pyrrolidone moiety. Excess acid was neutralized with sodium bicarbonate and the resulting solution dialysed against distilled water for three days. To this aqueous polymer solution (200 ml) was added 15.64 grams of chloroethylamine hydrochloride. The pH of the solution was adjusted to pH 10-10.5 and the solution heated to 70°C for three hours. At the end of the heating period, the solution was cooled to room temperature, stoppered, and allowed to sit at room temperature overnight. The next day the pH of the solution was observed to have drifted to pH ≈ 7.0. Glacial acetic acid was then added to adjust the pH to 3.5 and the reaction mixture stirred for three hours at room temperature. The final solution was dialysed for two days against distilled water.

A swatch of rayon towel was placed in 6% PEI in 0.5M sodium carbonate buffer, pH 9.45 for one hour at room temperature. The swatch was removed from from the PEI, wrung dry, and placed in 25% glutaraldehyde in 0.5M sodium carbonate, pH 9.45 for 30 minutes. The swatch was removed from the solution, washed in running tap water, and placed in 150 ml of 1.42% PVP modified with chloroethylamine hydrochloride. Twenty mls. Of 0.1M sodium phosphate buffer, pH 8.0 was added to the PVP solution. The reaction was permitted to proceed for 72 hours at room temperature. The swatch was then removed from the reaction mixture, rinsed copiously with warm tap water, distilled water, and dried at room temperature to produce a fabric containing a base coating of PEI and a second top coating of Polyvinylpyrrolidone, covalently linked to the PEI. When this fabric was placed in an aqueous solution of iodine (elemental), a dark tan coating formed on the fabric which could not be washed off with water. That the fabric contained elemental iodine could be demonstrated with sodium thiosulfate which decolorized the dark tan fabric to its original color. Hence a fabric containing covalently bound povidone-iodine (Betadine® or Proviodine®) had been formed.

### Example 21

A piece of rayon swatch was modified with PEI as taught in Example 9. Instead of reacting with a metal ion, the PEI modified fabric was converted to a phenyl bonded substrate for hydrophobic interaction chromaography. A piece of the PEI rayon swatch was placed in 150 ml of toluene in a 500 ml three neck, round bottom flask attached to a condenser and dropping funnel. To this solution, 5.0 ml of ± 1,2 epoxy-3-phenoxypropane was added slowly via the dropping funnel over 10 minutes. After addition of the phenoxypropane, the toluene/PEI fabric/phenoxypropane mixture was refluxed for 2.5 hours. After cooling at room temperature, the fabric was removed from the reaction mixture, washed twice with 100 ml of toluene and two times with 100 ml of methanol. The swatch was allowed to dry at room temperature, the fabric readily absorbed xylene from a xylene saturated aqueous solution.

## Claims

1. A method of producing an article capable of removing binding partners from aqueous solutions, said method comprising the steps of preparing a porous substrate, applying a bonding agent polymer to said substrate capable of reacting with the binding partners, applying a crosslinking agent to said polymer to crosslink said bonding agent polymer and to bind said polymer to said substrate, and applying at least one additional layer of bonding agent polymer to said substrate wherein said second layer is crosslinked to said first layer.

2. The method of claim 1 comprising the additional step of applying an additional quantity of crosslinking agent to said second layer of polymer.

3. The method of claim 1 wherein said binding partners are metal ions.

4. The method of claim 1 wherein said binding partners are small molecules.

5. The method of claim 1 wherein said polymer is selected from the group consisting of polyamines, polyalcohols, polysulfides, polyphosphates, polysulfates and polyalkylcarboxylic acids.

6. The method of claim 5 wherein said polymer comprises polyethyleneimine.

7. The method of claim 1 wherein said crosslinking agent is a bifunctional agent.

8. The method of claim 7 wherein said crosslinking agent is a heterobifunctional agent.

9. The method of claim 8 wherein said agent comprises glutaraldehyde.

10. The method of claim 1 wherein said polymer comprises polyethyleneimine and derivatives thereof, and said crosslinking agent comprises a dialdehyde.

11. The method of claim 1 wherein said porous substrate is a porous fabric.

12. The method of claim 11 wherein said fabric is a nonwoven fabric.

13. The method of claim 11 wherein said fabric comprises cellulose.

14. The method of claim 11 wherein said fabric comprises thermoplastic polymer fibers.

15. The method of claim 1 comprising the additional step of passing a flow of water containing the binding partner through said porous substrate, wherein the bonding agent polymer removes the binding partner from the water.

16. The method of claim 15 wherein the binding partner is dissolved in water.

17. The method of claim 15 comprising the additional step of subsequently removing the bound binding partner from said bonding agent polymer.

18. The method of claim 1 wherein said additional layer of bonding agent polymer is chemically different from said first layer.

19. The method of claim 1 wherein said bonding agent polymer is soluble in water.

20. A method for producing an article capable of removing binding partners from aqueous solutions, said methods comprising the steps of preparing a water insoluble porous substrate, applying a binding agent polymer to said substrate, said binding agent polymer capable of chemically reacting the binding partner, applying a crosslinking agent reactive with said binding agent polymer to crosslink said polymer and bind said polymer to said substrate, and chemically modifying said binding agent polymer to render it more specific to reaction with said binding partners.

21. The method of claim 20 wherein the step of chemically modifying said binding agent polymer comprises introducing specific chelating groups within the binding polymer.

22. The method of claim 20 wherein the step of chemically modifying said binding agent polymer comprises modifying the chemical nature of the polymer.

23. A product for removal of a binding partner from water, said product comprising a porous, water insoluble substrate, a first layer of polymer bonding agent capable of reacting with a binding partner, a cross lining agent cross lining said polymer bonding agent to said porous substrate, and at least a second layer of polymer bonding agent crosslined to said first layer and serving to increase the bonding capacity of the first layer.

24. The product of claim 23 wherein the porous substrate is a porous fabric.

25. The product of claim 23 wherein the binding partner is an aqueous solution of metal ions in contact with the porous substrate.

26. The product of claim 23 wherein the first and second layers are chemically different polymers.
